# EUROPÄISCHE PATENTSCHRIFT

(11) **EP 2 644 309 B1**
(45) Veröffentlichungstag und Bekanntmachung des Hinweises auf die Patenterteilung: **29.04.2015**
(21) Anmeldenummer: 12161553.8
(22) Anmeldetag: 27.03.2012
(51) Int. Cl.: B23K 26/24, F16H 57/08, F16H 57/023, B29C 65/16

(54) **Getriebegehäuse für ein Planetengetriebe sowie Verfahren zur Herstellung desselben**
Housing for a planetary drive and method for production of the same.
Boîtier d'engrenage pour un engrenage épicycloïdal ainsi que le procédé de fabrication de celui-ci.

(43) Veröffentlichungstag der Anmeldung: 02.10.2013
(73) Patentinhaber: IMS Gear GmbH, 78166 Donaueschingen (DE)
(72) Erfinder: Kieninger, Matthias, 78089 Unterkirnach (DE)
(74) Vertreter: Westphal, Mussgnug & Partner Patentanwälte mbB

(56) Entgegenhaltungen:
- EP-A2- 0 255 323
- EP-A2- 2 369 625
- WO-A2-03/004211
- US-A1- 2009 057 452

## Beschreibung

Die Erfindung betrifft ein Getriebegehäuse für ein Planetengetriebe gemäß Oberbegriff des Patentanspruchs 1 sowie ein Verfahren gemäß Anspruch 10 zur Herstellung des erfindungsgemäßen Getriebegehäuses und ein Planetengetriebe mit dem erfindungsgemäßen Getriebegehäuse.

Die Funktion von Planetengetrieben ist bekannt. In der Mitte befindet sich ein Sonnenrad, das von einem Motor angetrieben wird, der über einen Motorflansch bzw. Antriebsflansch mit dem Planetengetriebe verbunden ist. Das Sonnenrad überträgt seine Bewegung auf wenigstens zwei oder drei umlaufende, eine Getriebestufe bildende Planetenräder, die auf Lagerbolzen eines Planetenträgers angeordnet sind. Bei mehreren Getriebestufen ist der letzte Planetenträger mit einer in einem Abtriebsflansch gelagerten Abtriebswelle fest verbunden und sorgt so für die Kraftübertragung am Abtrieb. Außen laufen die Planetenräder in einem Getriebegehäuse mit Innenverzahnung, dem so genannten Hohlrad.

Aus der DE 20 2007 003 419 U1 ist ein gattungsbildendes Planetengetriebe bekannt, bei dem das Sonnenrad, die Planetenräder und das Hohlrad aus Kunststoff bestehen. Das Hohlrad wird auf einer Stirnseite von einem als Abdeckzylinder ausgebildeten Motorflansch abgedeckt, während abtriebsseitig das Hohlrad auf einem als Sockel ausgebildeten Abtriebsflansch aufgesetzt ist.

Die Verbindung von Hohlrad und Abtriebsflansch bzw. Antriebsflansch erfolgt bei Planetengetrieben herkömmlicherweise mittels einer Schraubverbindung, insbesondere wenn die an einer solchen Verbindung beteiligten Bauteile aus Metall sind.

Die DE 2 261 388 A beschreibt ein Laser-Schweißverfahren zum Verschweißen eines Kunststoffendteils mit einem röhrenförmigen Kunststoffkörper, bei dem das Kunststoffendteil in den Kunststoffkörper unter Ausbildung eines Presssitzes endseitig eingesteckt wird, so dass dabei zwischen dem Endteil und dem röhrenförmigen Körper eine ringförmige Berührungszone gebildet wird, die von außen mit einem Laserstrahl bestrahlt wird, um die beiden Teile miteinander zu verschweißen. Gleichzeitig mit der Bestrahlung wird eine relative Drehbewegung zwischen dem Laserstrahl und dem röhrenförmigen Kunststoffkörper mit dem Endteil erzeugt, so dass dadurch eine radial umlaufende Schweißnaht entsteht.

Das Dokument EP 0 255 323 A2 bildet den nächstliegenden Stand der technik und offenbart alle Mermale des Oberbegriffs des Anspruch 1.

Dieses Laser-Durchstrahlschweißen hat sich als Alternative zu anderen aus dem Stand der Technik bekannten Verbindungstechniken wie Verschrauben oder Verkleben herausgebildet. Beim Laser-Durchstrahlschweißen strahlt Laserlicht durch ein für das Laserlicht transparentes Bauteil hindurch und wird an einer Oberfläche eines zweiten Bauteils absorbiert, so dass dessen Oberfläche lokal aufschmilzt. Aufgrund des flächigen Kontaktes der beiden Bauteile, die während des Schweißvorgangs aneinander gepresst werden, wird auch das für das Laserlicht transparente Werkstück lokal aufgeschmolzen, so dass sich nach dem Abkühlen im Bereich einer Grenzfläche zwischen den beiden Werkstücken eine Laserschweißnaht bildet.

So weist auch die DVS Richtlinie 2242 unter Pkt. 7.2.1 darauf hin, dass zur Erzielung hochbelasteter, mittels Laser-Durchstrahlschweißen hergestellter Verbindungen bei Verfahren ohne Abschmelzweg die Fügeflächen gleichmäßig aufliegen und nahezu spaltfrei sein müssen. Dies könne gemäß dieser Richtlinie durch Anpressen mittels Niederhalter oder Schnappverbindungen geschehen. Ferner wird darauf hingewiesen, dass im Fall von kreisrunden Fügequerschnitten sich in der Praxis Presspassungen bewährt hätten.

Die Aufgabe der Erfindung ist es, ein Getriebegehäuse für ein Planetengetriebe der eingangs genannten Art bereitzustellen, welches mit entsprechenden Verzahnungsteilen, also wenigstens einem Planetenträger mit Planetenräder und wenigstens einem Sonnenrad als Vollkunststoff-Planetengetriebe aufgebaut werden kann. Eine weitere Aufgabe besteht darin, ein Verfahren zur Herstellung eines solchen Getriebegehäuses anzugeben.

Die erstgenannte Aufgabe wird gelöst durch ein Getriebegehäuse für ein Planetengetriebe mit den Merkmalen des Patentanspruchs 1.

Ein solches Getriebegehäuse für ein Planetengetriebe zur Aufnahme von das Planetengetriebe bildende Verzahnungsteilen mit einem eine Innenverzahnung aufweisenden hohlzylindrischen Gehäusekörper, welcher jeweils stirnseitig mit einem Lagerflansch verbindbar ist, zeichnet sich erfindungsgemäß dadurch aus, dass der Gehäusekörper und wenigstens ein Lagerflansch zur Ausbildung eines Überdeckungsbereiches jeweils stirnseitig axial überlappend ausgebildet sind, im Überdeckungsbereich der Gehäusekörper und der wenigstens eine Lagerflansch mit einer Pressverbindung, insbesondere einer Presspassung ausgebildet sind, und zumindest im Überdeckungsbereich als Materialien für den Gehäusekörper und für den wenigstens einen Lagerflansch ein laserlichtdurchlässiges und ein laserlichtundurchlässiges Material derart vorgesehen ist, dass durch eine in den Innenraum des Getriebegehäuses gerichtete Laserstrahlung im Überdeckungsbereich der Gehäusekörper und der wenigstens eine Lagerflansch durch Laser-Durchstrahl-schweißen miteinander verschweißt werden.

Mit diesem erfindungsgemäßen Getriebegehäuse wird für das Planetengetriebe ein kompakter Aufbau mit geringem Gewicht erreicht, bei dem bspw. wegen einer fehlenden Schraubverbindung die Teileanzahl reduziert ist. Ferner ist auch der Montageaufwand gegenüber bspw. einer Schraubverbindung reduziert.

In einer vorteilhaften Ausgestaltung der Erfindung ist es vorgesehen, dass der Gehäusekörper zur Bildung des Überdeckungsbereiches an einer Stirnseite mit einem einen Randbereich des wenigstens einen Lagerflansches koaxial umschließenden axialen Flansch ausgebildet ist. Damit wird die Montage erleichtert, da der wenigstens eine Lagerflansch lediglich an dem Gehäusekörper stirnseitig eingesteckt zu werden braucht. Ferner kann dieser axiale Flansch mit einer Wandstärke ausgebildet werden, die von der eingestrahlten Laserstrahlung nur einen geringen Anteil absorbiert.

Vorzugsweise ist der Überdeckungsbereich des wenigstens einen Lagerflansches als Schaft ausgebildet, der von dem axialen Flansch des Gehäusekörpers konzentrisch umschlossenen ist. Vorzugsweise wird der Schaft von einer radialen Schulterfläche begrenzt, an der der axiale Flansch des Gehäusekörpers mit seiner Stirnseite anliegt. Damit wird die Lage des Lagerflansches definiert, so dass eine fehlerhafte Montage verhindert wird.

Eine besonders vorteilhafte Weiterbildung der Erfindung ergibt sich, wenn zum Verschweißen des Gehäusekörpers mit dem wenigstens einen Lagerflansch im Bereich der Presspassung wenigstens eine radial umlaufende Schweißnaht vorgesehen ist. Damit wird die Dichtigkeit des Getriebegehäuses sichergestellt. Um eine hohe Dichtigkeit des Getriebegehäuses über die Lebensdauer des Planetengetriebes zu gewährleisten, ist es weiterbildungsgemäß vorgesehen, wenigstens eine weitere radial umlaufende Schweißnaht in einem axialen Abstand zur einen umlaufenden Schweißnaht im Bereich der Presspassung vorzusehen.

In einer weiteren Ausgestaltung der Erfindung werden als laserdurchlässiges und lasernichtdurchlässiges Material thermoplastische Kunststoffe eingesetzt. Dabei wird vorzugsweise ein laserdurchlässiges Material eingesetzt, welches für eine Wellenlänge oder für einen Wellenlängenbereich laserdurchlässig ist, während als laserundurchlässiges Material ein für eine Wellenlänge oder für einen Wellenlängenbereich laserundurchlässig Material eingesetzt wird.

Die zweitgenannte Aufgabe wird gelöst durch ein Verfahren zur Herstellung eines erfindungsgemäßen Getriebegehäuses für ein Planetengetriebe mit den Merkmalen des Patentanspruchs 11.

Ein solches Verfahren zeichnet sich erfindungsgemäß dadurch aus, dass zum Laser-Durchstrahlverschweißen des Gehäusekörpers mit dem wenigstens einen Lagerflansch eine auf eine Außenfläche des Getriebegehäuses radial gerichtete Laserstrahlung im Überdeckungsbereich vollständig radial um das Getriebegehäuse geführt wird.

Vorzugsweise ist es dabei vorteilhaft, wenn die relative Drehung zwischen dem Laserstrahl und dem Getriebegehäuse dadurch erzeugt wird, dass mit dem Getriebegehäuse wenigstens eine Vollumdrehung ausführt wird, d. h. der Laser bleibt dabei ortsfest.

Ein mit dem erfindungsgemäßen Getriebegehäuse aufgebautes Planetengetriebe umfasst wenigstens einen Planetenträger mit wenigstens einem in der Innenverzahnung des Gehäusekörpers umlaufenden Planetenrad auf, wobei der Planetenträger abtriebsseitig mit einer in einem abtriebsseitigen Lagerflansch gelagerten Abtriebswelle wirkverbunden ist, sowie ein mit dem wenigstens einen Planetenrad kämmendes Sonnenrad, welches mit einer in dem antriebsseitigen Lagerflansch gelagerten Antriebswelle wirkverbunden ist.

Ein Vollkunststoff-Planetengetriebe wird mit dem erfindungsgemäßen Getriebegehäuse dadurch geschaffen, dass neben dem Gehäusekörper mit der Innenverzahnung und den Lagerflanschen auch die Planetenräder zusammen mit dem Planetenträger und das Sonnenrad aus Kunststoff hergestellt sind. Dies führt neben einer Geräuschreduzierung im Betrieb des Planetengetriebes auch zu einer Gewichtsreduzierung, welches besonders im automobilen Anwendungsbereich vorteilhaft ist.

Die Erfindung wird nachfolgend anhand von Ausführungsbeispielen unter Bezugnahme auf die beigefügten Figuren ausführlich beschrieben. Es zeigen:
- Figur 1: eine perspektivische Schnittdarstellung eines Getriebegehäuses mit Innenverzahnung und antriebsseitigen sowie abtriebsseitigen Lagerflanschen für ein Planetengetriebe als Ausführungsbeispiel der Erfindung,
- Figur 2: eine Schnittdarstellung des Getriebegehäuses nach Figur 1 mit Verzahnungsteilen,
- Figur 3: eine vergrößerte Darstellung eines Details X aus den Figuren 1 und 2, und
- Figur 4: eine Darstellung des Details X nach Figur 3 mit Schweißnähten.

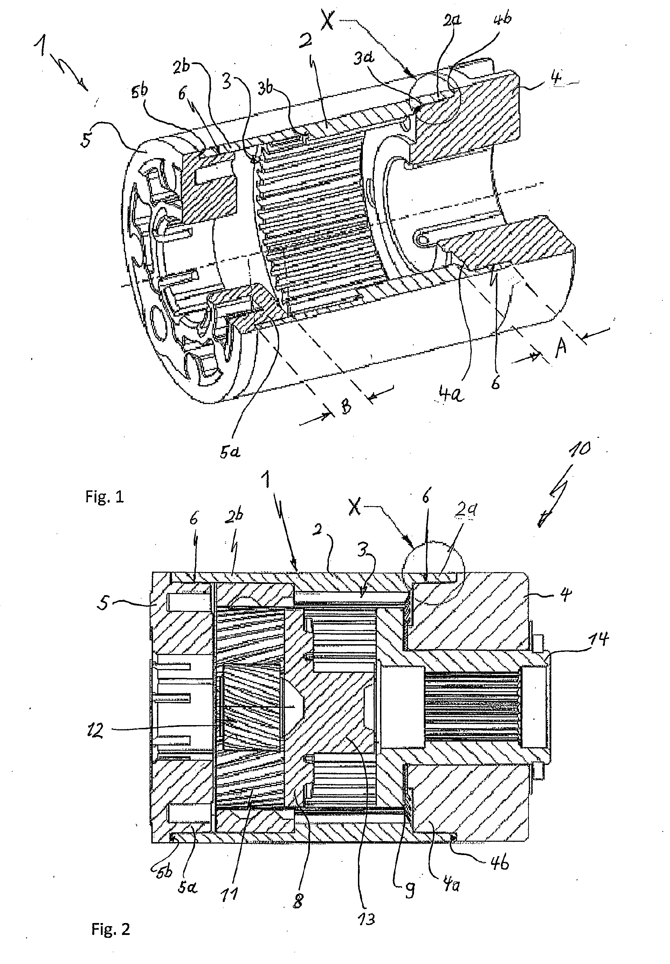

Nach Figur 1 besteht das erfindungsgemäße Getriebegehäuse 1 eines Planetengetriebes aus einem rohr- bzw. hohlzylinderförmigen Gehäusekörper 2, welcher in einem mittleren Bereich eine als Zahnkranz ausgebildete Innenverzahnung 3 sowie aus an dem Gehäusekörper 2 jeweils stirnseitig aufgesteckte Lagerflansche 4 und 5 besteht, die als abtriebsseitiger Lagerflansch 4 und als antriebsseitiger Lagerflansch 5 ausgebildet sind.

Ein mit diesem Getriebegehäuse 1 nach Figur 1 aufgebautes Planetengetriebe 10 zeigt Figur 2, bei dem entsprechende Verzahnungsteile, wie Planetenträger mit Planetenräder und Sonnenräder sowie Antriebs- und Abtriebswellen von diesem Getriebegehäuse aufgenommen werden.

Zunächst wird anhand der Figuren 1, 3 und 4 das Getriebegehäuse 1 beschrieben, insbesondere das Verfahren, mittels Laser-Durchstrahlschweißen die beiden Lagerflansche 4 und 5 mit dem Gehäusekörper 2 zu verbinden.

Der Gehäusekörper 2 ist an seinen beiden Stirnflächen jeweils mit einem axialen Flansch 2a und 2b ausgebildet, die jeweils von einer stirnseitigen Schulterfläche 3a und 3b des Zahnkranzes 3 begrenzt werden. Um die beiden Lagerflansche 4 und 5 stirnseitig auf den Gehäusekörper 2 aufstecken zu können, weisen die beiden Lagerflansche 4 und 5 jeweils einen Schaft 4a und 5a auf, deren Außendurchmesser an den Innendurchmesser der ringförmigen axialen Flansche 2a und 2b angepasst sind. Die Umfangsfläche des Schaftes 4a bzw. 5b des Lagerflansches 4 bzw. 5 endet in einer Schulterfläche 4b bzw. 5b, so dass durch das Aufstecken des Lagerflansches 4 bzw. 5 die Stirnfläche des axialen Flansches 2a bzw. 2b an dieser Schulterfläche 4b bzw. 5b anliegt und sich dadurch ein axialer Überdeckungsbereich A bzw. B zwischen dem Gehäusekörper 2 mit dem Lagerflansch 4 einerseits und dem Lagerflansch 5 andererseits entsteht. Dabei umschließt der axiale Flansch 2a bzw. 2b konzentrisch den Schaft 4a bzw. 5a des Lagerflansches 4 bzw. 5.

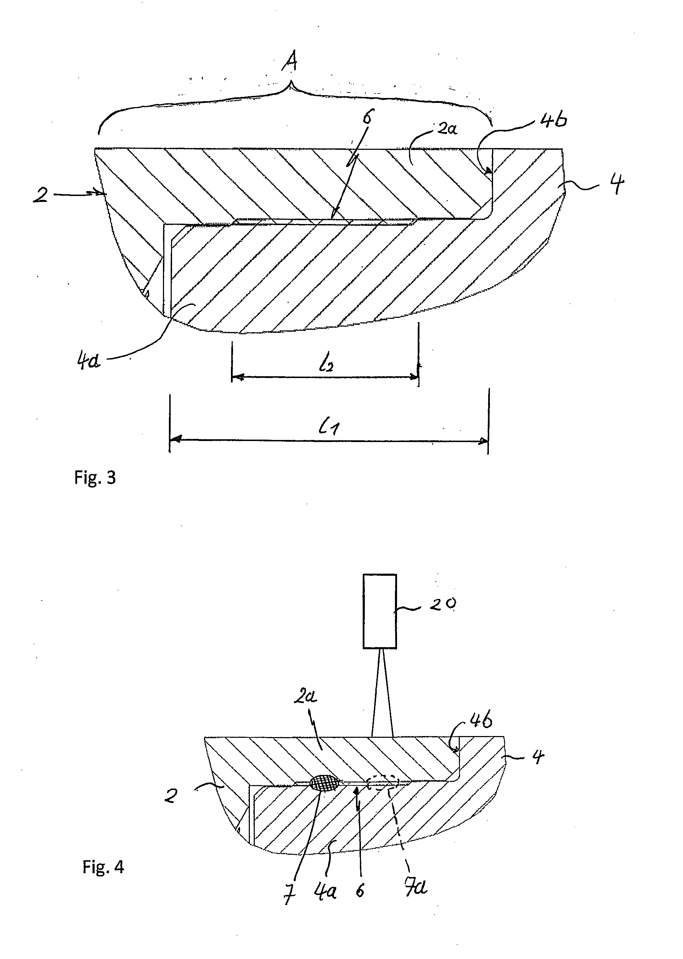

Die vergrößerte Darstellung des Details X aus Figur 1 zeigt nach Figur 3 einen Schaft 4a des Lagerflansches 4 mit einer axialen Länge von l₁, die im Wesentlichen der axialen Länge des Überdeckungsbereiches A zwischen dem Gehäusekörper 2 und dem Lagerflansch 4, hier der abtriebsseitige Lagerflansch entspricht.

In diesem Überdeckungsbereich A gemäß Figur 3 sind der Gehäusekörper 2 und der Lagerflansch 4 mit einer Presspassung 6 der Länge l₂ ausgebildet, die im Wesentlichen mittig hinsichtlich der Länge l₁ der Überdeckung A verläuft. Dies bedeutet, dass in diesem Bereich 6 der Außendurchmesser des Schaftes 4a größer ist als der Innendurchmesser im Bereich des axialen Flansches 2a unter Berücksichtigung des jeweiligen Toleranzbandes dieser beiden Maße ist.

Entsprechend Figur 3 ist auch der axiale Flansch 2b des Gehäusekörpers 2 und der antriebsseitige Lagerflansch 5 mit einer Presspassung 6 ausgebildet. Auch dort ist im mittleren Bereich des von dem Schaft 5a des Lagerflansches 5 und dem axialen Flansch 2b des Gehäusekörpers 2 gebildeten Überdeckungsbereiches B die Presspassung ausgebildet, d. h. dort ist der Außendurchmesser des Schaftes 5a größer als der Innendurchmesser des axialen Flansches 2b unter Berücksichtigung des jeweiligen Toleranzbandes dieser beiden Maße.

Durch das Einstecken bzw. das Einpressen des Lagerflansches 4 auf den Gehäusekörper 2 werden die Berührungsflächen im Bereich der Presspassung 6 aufeinander gepresst, so dass im Wesentlichen kein Spalt entsteht.

Anschließend kann mittels eines Lasers 20, dessen Laserstrahlung radial von außen auf den Bereich der Presspassung 6 gerichtet ist, nach dem Prinzip des Durchstrahlschweißen eine radial umlaufende Schweißnaht zwischen der Innenwandung des axialen Flansches 2a bzw. 2b und der Außenwandung des Schaftes 4a bzw. 5a des Lagerflansches 4 bzw. 5 erzeugt werden, wie dies in Figur 4 für den abtriebsseitigen Lagerflansch 4 dargestellt ist.

Um das Laser-Durchstrahlschweißen ausführen zu können, besteht der Gehäusekörper 2 aus einem für die verwendete Laserstrahlung des Lasers 20 durchlässigen Kunststoff, d. h. das Material eines solchen Kunststoffes weist eine kleine Absorptionskonstante auf. Die beiden Lagerflansche 4 und 5 sind aus einem für die verwendete Laserstrahlung laserundurchlässigen oder nur wenig laserdurchlässigen Kunststoff hergestellt, d. h. dass dieses Material eine hohe Absorptionskonstante aufweist.

Daher durchdringt die Laserstrahlung des Lasers 20 zunächst im Wesentlichen ungehindert den axialen Flansch 2a bzw. 2b und trifft dann auf den Schaft 4a bzw. 5a des Lagerflansches 4 bzw. 5, wo sie absorbiert und in Wärme umgewandelt wird. Mit zunehmendem Energieeintrag durch die Laserstrahlung wird im Bereich der Presspassung, genauer im Bereich des Energieabsorptionsvolumen das Material des Schaftes 4a bzw. 5a aufgeschmolzen und führt durch Wärmeleitung auch zu einem Aufschmelzen des axialen Flansches 2a bzw. 2b in diesem Bereich, so dass durch Vermischen der Schmelzen und nach dem Abkühlen unter Erstarrung der Schmelzen eine dauerhafte stoffschlüssige Verbindung entsteht, die in Figur 4 als Schweißnaht 7 dargestellt ist.

Diese radial umlaufende Schweißnaht 7 gemäß Figur 4 entsteht dadurch, dass das Getriebegehäuse 1 bzw. das fertig montierte Planetengetriebe 10 in eine axiale Drehung versetzt wird, so dass die Laserstrahlung des Laser 20 radial auf der Außenfläche des Gehäusekörpers 1 mit wenigstens einer Vollumdrehung geführt wird. Eine weitere axial versetzte Schweißnaht 7a kann in gleicher Weise erzeugt werden (vgl. Figur 4), wobei es auch möglich ist, die beiden Schweißnähte 7 und 7a gleichzeitig mittels eines den Strahl des Lasers 20 in zwei Strahlen aufteilenden Strahlteilers zu erzeugen, wobei auch hier das Getriebegehäuse 1 bzw. das fertig montierte Planetengetriebe 10 axial um eine Vollumdrehung gedreht wird.

Zur Erzeugung der Schweißnaht 7 bzw. der beiden Schweißnähte 7 und 7a können auch mehr als nur eine Vollumdrehung erforderlich sein.

Bevor zumindest beide Lagerflansche 4 und 5 mit dem Gehäusekörper 2 stoffschlüssig verbunden werden, müssen die für ein Planetengetriebe erforderlichen Verzahnungsteile in das Getriebegehäuse 1 montiert werden.

Ein mit dem erfindungsgemäßen Getriebegehäuse 1 montierten Planetengetriebe 10 zeigt Figur 2. Dieses Planetengetriebe 10 ist als zweistufiges Getriebe mit einem ersten, Planetenräder (nicht dargestellt) tragenden Planetenträger 8 und einem zweiten, ebenso Planetenräder (nicht dargestellt) tragenden Planetenträger 9 aufgebaut. Die Planetenräder des ersten Planetenträgers kämmen mit einem weiteren Hohlrad 11, während die Planetenräder des zweiten Planetenträgers 9 mit der Innenverzahnung 3 des Gehäusekörpers 2 kämmen.

Ein Sonnenrad 12, welches auf einer von dem antriebsseitigen Lagerflansch 5 gelagerten Antriebswelle (nicht dargestellt) angeordnet ist, treibt die Planetenräder des ersten Planetenträgers 8 an. Ein abtriebsseitig mit dem ersten Planetenträger 8 verbundenes Sonnenrad 13 kämmt mit den Planetenrädern des zweiten Planetenträges 9, der abtriebsseitig eine Abtriebswelle 14 bildet.

Das Planetengetriebe 10 nach Figur 2 kann als Vollkunststoff-Getriebe ausgeführt werden, bei dem nicht nur das Getriebegehäuse 1 aus Kunststoff besteht sondern auch die zugehörigen Verzahnungsteile, wie Planetenträger 8 und 9 mit den zugehörigen Planetenräder sowie die Sonnenräder 12 und 13.

### Bezugszeichenliste

- 1: Getriebegehäuse
- 2: Gehäusekörper des Getriebegehäuses 1
- 2a: axialer Flansch des Gehäusekörpers 2
- 2b: axialer Flansch des Gehäusekörpers 2
- 3: Innenverzahnung,
- 3a: Schulterfläche der Innenverzahnung 3
- 3b: Schulterfläche der Innenverzahnung 3
- 4: Lagerflansch, Abtriebsflansch
- 4a: Schaft des Lagerflansches 4
- 4b: Schulterfläche des Schaftes 4a
- 5: Lagerflansch, Antriebsflansch
- 5a: Schaft des Lagerflansches 5
- 5b: Schulterfläche des Schaftes 4a
- 6: Presspassung
- 7: Schweißnaht
- 7a: Schweißnaht
- 8: Planetenträger
- 9: Planetenträger

- 10: Planetengetriebe
- 11: Hohlrad
- 12: Sonnenrad
- 13: Sonnenrad
- 14: Abtriebswelle

- A: Überdeckungsbereich
- B: Überdeckungsbereich

- l₁: Länge des Überdeckungsbereiches A, B
- l₂: Länge der Presspassung

## Patentansprüche

1. Getriebegehäuse (1) für ein Planetengetriebe (10) zur Aufnahme von das Planetengetriebe (10) bildende Verzahnungsteilen (8, 9,11, 12, 13) mit einem eine Innenverzahnung (3) aufweisenden hohlzylindrischen Gehäusekörper (2), welcher jeweils stirnseitig mit einem Lagerflansch (4, 5) verbindbar ist, wobei
- der Gehäusekörper (2) und wenigstens ein Lagerflansch (4, 5) zur Ausbildung eines Überdeckungsbereiches (A, B) jeweils stirnseitig axial überlappend ausgebildet sind,
- im Überdeckungsbereich (A, B) der Gehäusekörper (2) und der wenigstens eine Lagerflansch (4, 5) mit einer Pressverbindung (6) ausgebildet sind, **dadurch gekennzeichnet, dass**
- zumindest im Überdeckungsbereich (A, B) als Materialien für den Gehäusekörper (2) und für den wenigstens einen Lagerflansch (4, 5) ein laserlichtdurchlässiges und ein laserlichtundurchlässiges Material derart vorgesehen ist, dass durch eine in den Innenraum des Getriebegehäuses (1) gerichtete Laserstrahlung im Überdeckungsbereich (A, B) der Gehäusekörper (2) und der wenigstens eine Lagerflansch (4, 5) durch Laser-Durchstrahlschweißen miteinander verschweißt werden.

2. Getriebegehäuse (1) nach Anspruch 1,
**dadurch gekennzeichnet, dass** der Gehäusekörper (2) zur Bildung des Überdeckungsbereiches (A, B) an einer Stirnseite mit einem einen Randbereich des Lagerflansches (4, 5) koaxial umschließenden axialen Flansch (2a, 2b) ausgebildet ist.

3. Getriebegehäuse (1) nach Anspruch 2,
**dadurch gekennzeichnet, dass** der Überdeckungsbereich (A, B) des wenigstens einen Lagerflansches (4, 5) als Schaft (4a, 5a) ausgebildet ist, der von dem axialen Flansch (2a, 2b) des Gehäusekörpers (2) konzentrisch umschlossenen ist.

4. Getriebegehäuse (1) nach Anspruch 3,
**dadurch gekennzeichnet, dass** der Schaft (4a, 4b) von einer radialen Schulterfläche (4b, 5b) begrenzt wird, an der der axiale Flansch (2a, 2b) des Gehäusekörpers (2) mit seiner Stirnseite anliegt.

5. Getriebegehäuse (1) nach einem der vorhergehenden Ansprüche,
**dadurch gekennzeichnet, dass** zum Verschweißen des Gehäusekörpers (2) mit dem wenigstens einen Lagerflansch (4, 5) im Bereich der Pressverbindung (6) wenigstens eine radial umlaufende Schweißnaht (7) vorgesehen ist.

6. Getriebegehäuse (1) nach Anspruch 5,
**dadurch gekennzeichnet, dass** wenigstens eine weitere radial umlaufende Schweißnaht (7a) in einem axialen Abstand zur einen umlaufenden Schweißnaht (7) im Bereich der Presspassung (6) vorgesehen ist.

7. Getriebegehäuse (1) nach einem der vorhergehenden Ansprüche,
**dadurch gekennzeichnet, dass** als laserdurchlässiges und lasernichtdurchlässiges Material thermoplastische Kunststoffe eingesetzt werden.

8. Getriebegehäuse (1) nach einem der vorhergehenden Ansprüche,
**dadurch gekennzeichnet, dass** ein laserdurchlässiges Material vorgesehen ist, welches für eine Wellenlänge oder für einen Wellenlängenbereich laserdurchlässig ist, und ein laserundurchlässiges Material vorgesehen ist, welches für eine Wellenlänge oder für einen Wellenlängenbereich laserundurchlässig ist.

9. Getriebegehäuse (1) nach einem der vorhergehenden Ansprüche,
**dadurch gekennzeichnet, dass** die Lagerflansche als abtriebsseitiger und antriebsseitiger Lagerflansch (4, 5) ausgebildet sind.

10. Verfahren zur Herstellung eines Getriebegehäuses (1) nach einem der vorhergehenden Ansprüche,
**dadurch gekennzeichnet, dass** zum Laser-Durchstrahlschweißen des Gehäusekörpers (2) mit dem wenigstens einen Lagerflansch (4, 5) eine auf eine Außenfläche des Gehäusekörpers(2) radial gerichtete Laserstrahlung im Überdeckungsbereich (A, B) vollständig radial um das Getriebegehäuse (1) geführt wird.

11. Verfahren nach Anspruch 10,
**dadurch gekennzeichnet, dass** zur radialen Führung der Laserstrahlung das Getriebegehäuse (1) wenigstens eine Vollumdrehung ausführt.

12. Planetengetriebe (10) mit einem Getriebegehäuse (1) nach einem der Ansprüche 1 bis 9, welches wenigstens einen Planetenträger (8, 9) mit wenigstens einem in der Innenverzahnung (3) des Gehäusekörpers (2) umlaufenden Planetenrad aufweist, wobei der Planetenträger (8, 9) abtriebsseitig mit einer in einem abtriebsseitigen Lagerflansch (4) gelagerten Abtriebswelle (14) wirkverbunden ist, und ein mit dem wenigstens einen Planetenrad kämmendes Sonnenrad (12), welches mit einer in dem antriebsseitigen Lagerflansch (5) gelagerten Antriebswelle wirkverbunden ist.

13. Planetengetriebe (10) nach Anspruch 12,
**dadurch gekennzeichnet, dass** die Planetenräder zusammen mit dem wenigstens einen Planetenträger (8, 9) und das wenigstens eine Sonnenrad (12, 13) aus Kunststoff hergestellt sind.

## Claims

1. Gearbox (1) for a planetary gear (10) for the accommodation of the splines (8, 9, 11, 12, 13) forming that planetary gear (10), with a hollow cylindrical housing unit (2) having internal teeth (3), which, in each case, is connectable to a bearing flange (4, 5) at the front end, such that
- the housing unit (2) and at least one bearing flange (4, 5) for the creation of a covering area (A, B) are in each case made in an axially overlapping manner at the front end,
- the housing unit (2) and the at least one bearing flange (4, 5) are made with a swaged socket (6) in the covering area (A, B), **characterised by** the fact that
- at least in the covering area (A, B), a laser light translucent material and a laser light non-translucent material are provided as a material for the housing unit (2), and for the at least one bearing flange (4, 5), in such a way that, in the covering area (A, B), the housing unit (2) and the at least one bearing flange (4, 5) are welded together through laser beam welding by a laser beam directed into the interior of the gearbox (1).

2. Gearbox (1) in accordance with Claim 1, **characterised by** the fact that the housing unit (2) is made with an axial flange (2a, 2b) coaxially surrounding the periphery of the bearing flange (4, 5) on a front side to form the covering area (A, B).

3. Gearbox (1) in accordance with Claim 2, **characterised by** the fact the covering area (A, B) of the at least one bearing flange (4, 5) is made as a shaft (4a,5a) which is concentrically surrounded by the axial flange (2a, 2b) of the housing unit (2).

4. Gearbox (1) in accordance with Claim 3, **characterised by** the fact that the shaft (4a, 4b) is bordered by a radial shoulder surface (4b, 5b) against which the axial flange (2a, 2b) of the housing unit (2) lies with its front side.

5. Gearbox (1) in accordance with one of the foregoing claims **characterised by** the fact that at least one radial all round welded seam (7) is provided for the welding of the housing unit (2) with the (at least one) bearing flange (4, 5) in the area of the swaged socket (6).

6. Gearbox (1) in accordance with Claim 5, **characterised by** the fact that at least one further radial all round welded seam (7a) is provided at an axial distance to an all round welded seam (7) in the area of the swaged socket (6).

7. Gearbox (1) in accordance with one of the foregoing claims, **characterised by** the fact that thermoplastic synthetic material is used as laser translucent and laser non-translucent material.

8. Gearbox (1) in accordance with one of the foregoing claims, **characterised by** the fact that a laser translucent material is provided which is laser translucent for a wavelength, or for a wavelength range, and a laser non-translucent material is provided which is laser non-translucent for a wavelength, or for a wavelength range.

9. Gearbox (1) in accordance with one of the foregoing claims, **characterised by** the fact that the bearing flanges are made as an output side and drive side bearing flange (4, 5).

10. Process for the manufacture of a gearbox (1) in accordance with one of the foregoing claims, **characterised by** the fact that, for the laser beam welding of the housing unit (2) with the at least one bearing flange (4, 5), a laser beam directed radially onto an outer surface of the housing unit (2) in the covering area (A, B) is guided completely radially around the gearbox (1).

11. Process in accordance with Claim 10, **characterised by** the fact that, for the radial guidance of the laser beam, the gearbox (1) performs at least one complete revolution.

12. Planetary gear (10) with a gearbox (1) in accordance with one of the claims 1 - 9, which has at least one planetary carrier (8, 9) with at least one revolving planetary wheel in the internal teeth (3) of the housing unit (2), such that the planetary carrier (8, 9) is functionally connected on the output side with an output shaft (14) mounted in an output side bearing flange (4), and a meshing sun wheel (12), with the at least one planetary wheel, which is functionally connected with a drive shaft mounted in the drive side bearing flange (5).

13. Planetary gear (10) in accordance with Claim 12, **characterised by** the fact that the planetary wheels, together with the at least one planetary carrier (8, 9), and the at least one sun wheel (12, 13) are manufactured from synthetic material.

## Revendications

1. Boitier d'engrenage (1) pour un train d'engrenage planétaire (10) permettant la réception de pièces d'engrenage (8, 9, 11, 12, 13) formant le train d'engrenage planétaire (10), comprenant un corps de boitier cylindrique creux (2) comportant une denture interne (3) qui peut être respectivement reliée côté frontal à une bride de palier (4, 5),
dans lequel
- le corps de boitier (2) et au moins une bride de palier (4, 5) sont respectivement formés de façon à se chevaucher axialement côté frontal pour former une zone de recouvrement (A, B),
- dans la zone de recouvrement (A, B) le corps de boitier (2) et la bride de palier (4, 5) sont réalisés avec un ajustement serré (6),
**caractérisé en ce qu'**
- au moins dans la zone de chevauchement (A, B) il est prévu, en tant que matériau pour le corps de boitier (2) et pour la bride de palier (4, 5), un matériau perméable au rayonnement laser et un matériau imperméable au rayonnement laser de sorte qu'un rayonnement laser orienté dans le volume interne du boitier d'engrenage (1), dans la zone de recouvrement (A, B), permette de souder le corps de boitier (2) et la bride de palier (4, 5) par soudure par irradiation laser.

2. Boitier d'engrenage (1) conforme à la revendication 1,
**caractérisé en ce que**
le corps de boitier (2) est réalisé, sur un côté frontal, pour former la zone de recouvrement (A, B), avec une bride axiale (2a, 2b) entourant coaxialement une zone de bord de la bride de palier (4, 5).

3. Boitier d'engrenage (1) conforme à la revendication 2,
**caractérisé en ce que**
la zone de recouvrement (A, B) de la bride de palier (4, 5) est réalisée sous la forme d'une tige (4a, 5a) qui est entourée concentriquement par la bride axiale (2a, 2b) du corps de boitier (2).

4. Boitier d'engrenage (1) conforme à la revendication 3,
**caractérisé en ce que**
la tige (4a, 4b) est limitée par une surface d'épaulement radiale (4b, 5b) sur laquelle s'appuie par son côté frontal la bride axiale (2a, 2b) du corps de boitier (2).

5. Boitier d'engrenage (1) conforme à l'une des revendications précédentes,
**caractérisé en ce que**
pour souder le corps de boitier (2) avec la bride de palier (4, 5), il est prévu dans la zone de l'ajustement serré (6) au moins un cordon soudure périphérique (7) s'étendant radialement.

6. Boitier d'engrenage (1) conforme à la revendication 5,
**caractérisé en ce qu'**
au moins un autre cordon de soudure périphérique s'étendant radialement (7a) est prévu à distance axiale du cordon de soudure périphérique (7) dans la zone de l'ajustement serré (6).

7. Boitier d'engrenage (1) conforme à l'une des revendications précédentes,
**caractérisé en ce qu'**
on utilise en tant que matériau perméable au rayonnement laser et en tant que matériau imperméable au rayonnement laser des matériaux synthétiques thermoplastiques.

8. Boitier d'engrenage (1) conforme à l'une des revendications précédentes,
**caractérisé en ce qu'**
il est prévu un matériau perméable au rayonnement laser qui est perméable au rayonnement laser pour une longueur d'onde ou pour une plage de longueur d'onde et un matériau imperméable au rayonnement laser qui est imperméable au rayonnement laser pour une longueur d'onde ou pour une plage de longueur d'onde.

9. Boitier d'engrenage (1) conforme à l'une des revendications précédentes,
**caractérisé en ce que**
les brides de palier sont réalisées sous la forme de brides de palier côté entrainement et d'une bride de palier (4, 5) côté entrainé.

10. Procédé d'obtention d'un boitier d'engrenage (1) conforme à l'une des revendications précédentes,
**caractérisé en ce que**
pour permettre la soudure par irradiation laser du corps de boitier (2) avec la bride de palier (4, 5) un rayonnement laser orienté radialement sur la surface externe du corps de boitier (2) est dirigé dans la zone de chevauchement (A, B) radialement autour de la totalité du boitier d'engrenage (1).

11. Procédé conforme à la revendication 10,
**caractérisé en ce que**
pour permettre le guidage radial du rayonnement laser, le boitier d'engrenage (1) est soumis à au moins une rotation complète.

12. Transmission planétaire (10) comportant un boitier d'engrenage (1) conforme à l'une des revendications 1-9, qui comporte au moins une cage de transmission planétaire (8, 9) avec une roue planétaire tournant dans la denture interne (3) du corps de boitier (2), la cage de transmission planétaire (8, 9) étant reliée fonctionnellement côté sortie avec un arbre entrainé (14) logé dans une bride de palier (4) côté entrainé, et, une roue solaire (12) engrenant avec la roue planétaire, étant reliée fonctionnellement à un arbre d'entrainement logé dans la bride de palier (5) côté entrainement.

13. Transmission planétaire (10) conforme à la revendication 12, **caractérisée en ce que**
les roues planétaires sont réalisées, avec la cage de transmission planétaire (8, 9) et la roue solaire (12, 13) en matériau synthétique.
